# EUROPÄISCHE PATENTSCHRIFT

(11) **EP 2 624 781 B1**
(45) Veröffentlichungstag und Bekanntmachung des Hinweises auf die Patenterteilung: **22.04.2015**
(21) Anmeldenummer: 10763187.1
(22) Anmeldetag: 07.10.2010
(51) Int. Cl.: A61C 8/00

(54) **ABUTMENT UND ZAHNPROTHETISCHE ANORDNUNG MIT EINEM SOLCHEN ABUTMENT**
ABUTMENT AND DENTAL-PROSTHETIC ARRANGEMENT HAVING SUCH AN ABUTMENT
PILIER ET DISPOSITIF DE PROTHÈSE DENTAIRE COMPRENANT UN TEL PILIER

(43) Veröffentlichungstag der Anmeldung: 14.08.2013
(73) Patentinhaber: BREDENT GMBH & CO. KG, 89250 Senden (DE)
(72) Erfinder: BENZ, Roland, 89073 Ulm (DE); BÖHM, Wilfried, 89250 Senden (DE)
(74) Vertreter: Baur & Weber Patentanwälte
(86) Internationale Anmeldenummer: PCT/EP2010/064998
(87) Internationale Veröffentlichungsnummer: WO 2012/045356

(56) Entgegenhaltungen:
- EP-A1- 2 168 531
- EP-A1- 2 266 498
- US-A- 5 116 225
- US-A1- 2008 153 063

## Beschreibung

Die Erfindung betrifft ein Abutment und eine zahnprothetische Anordnung.

Abutments bilden in der zahnprothetischen Anwendung Verbindungsglieder zwischen osseointegrierten Implantaten und Zahnprothesen. Nach Einheilen eines in eine Bohrung im Kieferknochen eingesetzten, typischerweise eingeschraubten Implantats, welches zum dauerhaften Verbleib im Kieferknochen vorgesehen ist, wird das Abutment auf dem Implantat befestigt und eine Zahnprothese als weiterer Aufbau auf das Abutment aufgesetzt. Bei Vollprothesen oder bei einen größeren Kieferabschnitten abdeckenden Teilprothesen ist es bekannt, einer Prothese mehrere Implantate und Abutments zuzuordnen. Insbesondere ist es für Vollprothesen bekannt, die gesamte Prothese an vier Abutments zu halten, von welchen zwei nach hinten in Richtung des Kiefergelenks versetzt angeordnet sind. Die Haltestrukturen der mehreren Abutments liegen annähernd in einer Ebene und das Aufsetzen der Prothese auf die Haltestrukturen der Abutments erfolgt im wesentlichen senkrecht zu dieser Ebene.

Insbesondere für die in Richtung des Kiefergelenks versetzt angeordneten Abutments ergibt sich, z. B. bei älteren Patienten und/oder bei bereits länger fehlenden originalen Zähnen häufig das Problem, dass der Kiefer stark atrophiert ist und senkrecht zu der genannten Ebene nicht ausreichend Knochensubstanz für eine Implantatbohrung zur Verfügung steht.

In der EP 2 168 531 A1 ist ein Implantataufbau beschrieben, bei welchem auf dem Implantat ein abgewinkelter Zwischenkörper festschraubbar ist, auf welchen wiederum ein Kugelkopf-Aufbau aufschraubbar ist. Bei diesem Implantataufbau ist an dem dem Implantat abgewandten Ende des Zwischenkörpers ein Innengewinde vorgesehen und der Kugelkopf-Aufbau weist ein Außengewinde auf.

Aus der EP 2 127 612 A1 ist es bekannt, insbesondere für solche Fälle geringer Knochensubstanz die Implantatbohrung im Kieferknochen schräg gegen die genannte Ebene geneigt auszuführen und über ein abgewinkeltes Abutment einen Richtungsausgleich vorzunehmen, um die Haltestruktur wieder für eine im wesentlichen senkrecht zu der Ebene verlaufende Aufsetzrichtung der Haltestruktur auszurichten. Die hierfür beschriebenen Abutments besitzen an einem implantatseitigen ersten Ende eine erste Achse, welche durch die Schraubenachse einer Befestigungsschraube gegeben ist, und an dem dem Implantat abgewandten zweiten Ende eine durch die Haltestruktur und deren Fügerichtung, in welcher die Prothese auf das Abutment aufgesetzt oder von diesem abgenommen wird, bestimmte zweite Achse. Die zweite Achse verläuft um wenigstens 10° gegen die erste Achse geneigt. Als Haltestrukturen sind in Richtung der zweiten Achse Vorsprünge an dem Abutment in Form eines Kugelkopfes oder eines Kegelstumpfes mit Innengewinde vorgesehen. Um das Abutment an dem Implantat zu befestigen ist zwischen dem ersten und dem zweiten Ende eine Werkzeugöffnung in dem Abutment in Verlängerung der ersten Achse ausgebildet. Die Werkzeugöffnung ermöglicht dem Ansatz eines Drehwerkzeugs an dem Schraubenkopf der Befestigungsschraube, um diese in eine Innenbohrung des Implantats einzuschrauben und mit definiertem Drehmoment anzuziehen. An dem ersten Ende des Abutments kann eine Verdrehsicherung z. B. in Form eines Sechskants vorgesehen sein, welche in eine entsprechende Aussparung im Implantat eingreift. Als Haltestrukturen sind auch sogenannte Druckknopfstrukturen mit einem um die zweite Achse umlaufenden Ringwulst bekannt.

Beispiele für abgewinkelte Abutments, auch als angulierte Abutments bezeichnet, sind auch in der WO 2008/141404 A1 oder in Fig. 9 der US 2008/0227058 A1 gegeben. In der US 5571015 oder der WO 2007/059595 A2 sind Keilkörper für eine Richtungskompensation beschrieben. Bekannt sind ferner Abutments mit internen klemmbaren Kugelgelenken. Für fest aufgeklebte oder verschraubte Einzelzahnprothesen insbesondere bei Frontzähnen sind Abutments mit geringer interner Abwinkelung zwischen einem Implantat und einem eine Krone aufnehmenden oberen Abschnitt bekannt.

Der vorliegenden Erfindung liegt die Aufgabe zugrunde, ein anguliertes Abutment und eine zahnprothetische Anordnung mit einem solchen Abutment, insbesondere mit abnehmbarer Prothese, mit in Handhabung und Hygiene vorteilhaften Eigenschaften anzugeben.

Erfindungsgemäße Lösungen sind in den unabhängigen Ansprüchen beschrieben. Die abhängigen Ansprüche enthalten vorteilhafte Ausgestaltungen und Weiterbildungen der Erfindung.

Die Unterteilung des Abutments in einen ersten Teilkörper, der mittels der Befestigungsschraube auf einem Implantat befestigbar ist, und einen zweiten, die Haltestruktur für die Prothese enthaltenden Teilkörper ermöglicht auf vorteilhafte Weise die einfache und zuverlässige Befestigung des Abutments auf dem Implantat und die zumindest teilweise oder vorzugsweise vollständige Überdekkung der in dem ersten Teilkörper ausgebildeten Werkzeugöffnung durch den zweiten Teilkörper, so dass die Gefahr der Ansammlung von Verunreinigungen in für den Benutzer unzugänglichen Vertiefungen verringert oder ganz vermieden ist. Für die Befestigung des ersten Teilkörpers auf dem Abutment ist dabei der Einsatz eines Werkzeugs in gebräuchlicher Weise ungehindert möglich. Eine Überdeckung der Werkzeugöffnung erfolgt erst danach durch Verbinden des zweiten Teilkörpers mit dem ersten.

Die Verbindung der beiden Teilkörper enthält eine Schraubverbindung mit einem zweiten Gewinde um die zweite Achse. Die Verbindung über eine Verschraubung, welche vorzugsweise ein Feingewinde enthält, erlaubt eine einfache und sichere Verbindung. Zugleich ist eine Schraubverbindung vorteilhafterweise zerstörungsfrei lösbar, so dass bei Beschädigung oder Verschleiß der Haltestruktur nur der zweite Teilkörper ausgetauscht werden muss, wobei der erste Teilkörper unbeschädigt und ohne Lageveränderung an dem Implantat befestigt bleibt und somit dabei die Belastung für den Träger der Prothese besonders gering ist. Die separate Austauschbarkeit des zweiten Teilkörpers erlaubt vorteilhafterweise auch den einfachen Wechsel zu einem anderen Haltesystem mit anderen Haltestrukturen auf Seiten des Abutments.

Typischerweise enthält ein Implantatsystem unterschiedlich stark angulierte Abutments, wobei ein Neigungswinkel zwischen erster und zweiter Achse typischerweise wenigstens 10° beträgt. Für Abutments mit unterschiedlichen solchen Neigungswinkeln können vorteilhafterweise einheitliche zweite Teilkörper eingesetzt werden.

Die Erfindung ist nachfolgend anhand bevorzugter Ausführungsbeispiele unter Bezugnahme auf die Abbildungen noch eingehend veranschaulicht. Dabei zeigt:
- Fig. 1: eine erste Ausführung eines Abutments,
- Fig. 2: das Abutment nach Fig. 1 mit getrennten Teilkörpern,
- Fig. 3: getrennte Teilkörper in Schrägansicht,
- Fig. 4: die Teilkörper nach Fig. 3 in verbundenem Zustand,
- Fig. 5: Teilkörper einer zweiten Ausführung eines Abutments.

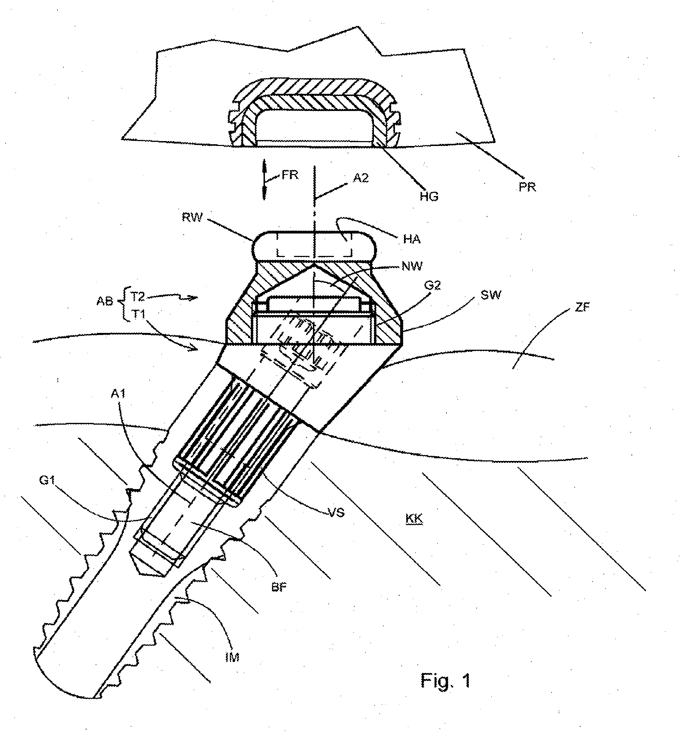

Fig. 1 zeigt schematisch eine zahnprothetische Anordnung mit einem in einem Kieferknochen KK verankerten Implantat IM, einem mit einem ersten Ende an dem Implantat befestigten Abutment AB mit Teilkörpern T1 und T2 sowie einer Prothese PR mit einer Gegenhaltestruktur HG zu einer an dem zweiten Ende des Abutments angeordneten Haltestruktur RW an dem zweiten Teilkörper T2 des Abutments, wobei Kiefer und Prothese nur in dem relevanten Ausschnitt dargestellt sind und die Prothese in einer von dem Abutment und dem Kiefer abgehobenen Position dargestellt ist.

Das Implantat IM besitzt in gebräuchlicher Art ein erstes Innengewinde, in welches über eine erste Gewindeverbindung G1 eine Befestigungsschraube BF zur Befestigung des Abutments AB auf dem Implantat IM eingeschraubt ist. Die Schraubenachse der Befestigungsschraube BF bzw. des ersten Innengewindes G1 bildet eine erste Achse A1 des Abutments, welche der Richtung des in den Kiefer zum Einsetzen des Implantats gebohrten Kanals entspricht. In dem Implantat kann von dessen dem Kieferknochen abgewandten Ende her in gleichfalls bekannter Art eine Aussparung eingebracht sein, welche im Querschnitt nicht kreisförmig ist und in welche eine gleichfalls nicht kreisförmige Verdrehsicherungsstruktur VS des Abutments eingreift. Querschnitte der Aussparung und der Verdrehsicherungsstruktur VS können beispielsweise sechszählig drehsymmetrisch um die erste Achse A1 ausgebildet sein, so dass das Implantat in für die Integration in den Knochen und den Überstand über den Knochen optimaler Einschraubtiefe in den gebohrten Kanal eingeschraubt werden kann und dabei mit nur geringer Variation der Einschraubtiefe eine für die gewünschte Ausrichtung des Abutments passende Drehposition um die erste Achse erreicht werden kann.

Um eine Prothese PR am Kiefer des Patienten zu halten, ist an dem Abutment eine Haltestruktur ausgebildet, welche mit einer Gegenhaltestruktur HG in der Prothese zusammen wirkt und eine Fügerichtung FR bestimmt, in welcher Haltestruktur und Gegenhaltestruktur zur Herstellung einer Halteverbindung zusammengefügt oder zum Lösen einer Halteverbindung voneinander getrennt werden können. Die Fügerichtung verläuft im wesentlichen parallel zu einer durch die Haltestruktur am Abutment vorgegebene zweite Achse A2. Geringe Winkelabweichungen sind bei den gebräuchlichen Halteverbindungen in Kugelkopf-, Ringwulst-, Konus-Techniken oder anderen zulässig.

Im skizzierten Beispielsfall ist die Haltestruktur an dem Teilkörper T2 des Abutments ausgebildet und als radial überstehender Ringwulst RW ausgeführt. Der Teilkörper T2 ist über eine zweite Gewindeverbindung G2 mit dem ersten Teilkörper verbunden. Zur Herstellung der Verbindung zwischen den beiden Teilkörpern oder zum Lösen der Verbindung ist der zweite Teilkörper T2 um die zweite Achse A2 drehbar.

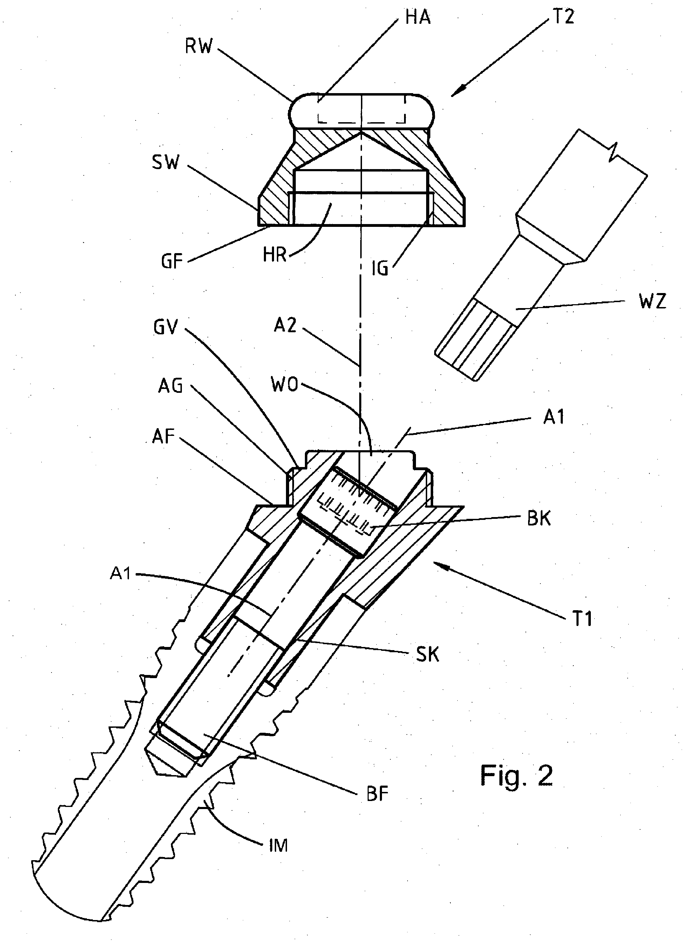

Die voneinander gelösten Teilkörper T1 und T2 sind in Fig. 2 in zu Fig. 1 entsprechender Seitenansicht dargestellt.

Der erste Teilkörper T1 weist an seinem dem Abutment abgewandten und dem zweiten Teilkörper T2 zugewandten Ende eine Anlagefläche AF auf, an welcher sich eine Gegenfläche GF als Endkante einer Seitenwand SW des Teilkörpers T2 im verbundenen Zustand der beiden Teilkörper abstützt. Gegen diese Anlagefläche in Richtung der zweiten Achse A2 zum zweiten Teilkörper T2 hin vorspringend ist ein Gewindestutzen GV angeordnet, welcher ein Außengewinde AG besitzt.

In dem Teilkörper T2 ist in der in Fig. 2 dargestellten Einbaulage dem ersten Teilkörper T1 zuweisend ein Hohlraum HR ausgebildet, welcher mit Ausnahme der dem ersten Teilkörper T1 zuweisenden Öffnung allseitig geschlossen ist. Der Teilkörper T2 hat hierdurch die ungefähre Form einer Kappe. Die den Hohlraum HR bezüglich der zweiten Achse A2 radial begrenzende Seitenwand SW weist an ihrer Innenfläche ein Innengewinde IG auf, welches zum Eingriff mit dem Außengewinde AG des Gewindevorsprungs GV am ersten Teilkörper zur Herstellung der zweiten Gewindeverbindung G2 ausgebildet ist.

In dem ersten Teilkörper T1 ist ein Schraubenkanal SK ausgebildet, durch welchen die Befestigungsschraube BF mit ihrem Schaft hindurch reicht. Der Schraubenkopf KF der Befestigungsschraube ist bezüglich der ersten Achse A1 axial am oberen Ende des Schraubenkanals abgestützt. In Verlängerung der ersten Achse dem ersten Ende E1 des Abutments und damit dem Implantat abgewandt ist eine Werkzeugöffnung WO vorgesehen, durch welche ein Drehwerkzeug WZ in Eingriff mit einem Werkzeugansatz im Schraubenkopf BK gebracht werden kann, um die Befestigungsschraube BF in das erste Gewinde G1 des Implantats einzudrehen und auf diese Weise den ersten Teilkörper T1 auf dem Implantat zu befestigen.

Wenn der erste Teilkörper T1 auf dem Implantat befestigt ist, wird der zweite Teilkörper T2 über die zweite Gewindeverbindung G2 mit Außengewinde AG und Innengewinde IG auf den ersten Teilkörper T1 aufgeschraubt und deckt dabei die Werkzeugöffnung WO vollständig ab und liegt mit der Gegenfläche GF an der Anlagefläche AF des ersten Teilkörpers an.

Zum Aufschrauben des zweiten Teilkörpers T2 auf den ersten Teilkörper T1 kann an dem zweiten Teilkörper T2 ein weiterer Werkzeugansatz, beispielsweise in Form einer Vertiefung HA gegen eine dem ersten Teilkörper abgewandte Endfläche DF des zweiten Teilkörpers T2 an dem zweiten Ende E2 des Abutments vorgesehen sein. Ein Werkzeugansatz kann auch durch eine andere nicht rotationssymmetrische Struktur an dem zweiten Teilkörper T2 ausgebildet sein. Der zweite Teilkörper kann aber auch allein durch reibschlüssigen Angriff eines Werkzeugs auf den ersten Teilkörper T1 aufgeschraubt oder von diesem gelöst werden.

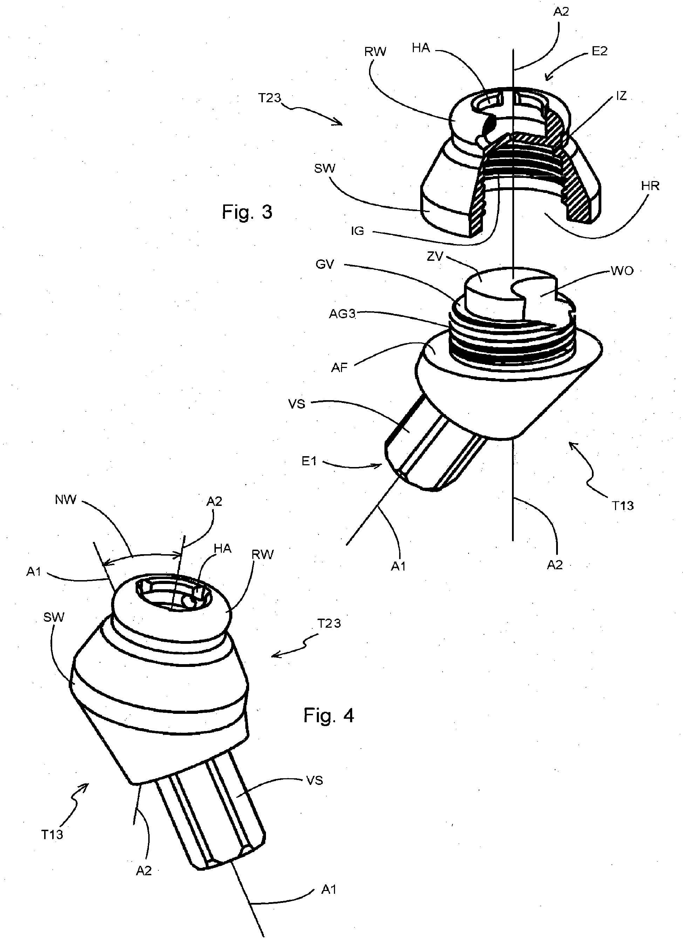

Fig. 3 zeigt in schrägperspektivischer Ansicht zwei Teilkörper T13 und T23, welche weitgehend den Teilkörpern T1 und T2 nach Fig. 1 und Fig. 2 entsprechen und sich von diesen nur durch Details der zweiten Gewindeverbindung und durch zusätzliche Zentriereinrichtungen unterscheiden. Gleiche Komponenten sind mit zu Fig. 1 und Fig. 2 gleichen Bezugszeichen versehen. Innengewinde IG und Außengewinde AG reichen in dieser Ausführung nicht ganz bis zu der Gegenfläche GF bzw. der Anlagefläche AF. Vorteilhafterweise kann von dem Gewindevorsprung GV ein kreiszylindrischer Zentrierfortsatz ZV in Richtung des zweiten Teilkörpers ragen, welcher mit einer Innenzentrierstruktur IZ im zweiten Teilkörper in die beiden Teilkörper zueinander um die zweite Achse A2 zentrierender Weise zusammenwirkt.

Aus Fig. 3 ist anschaulich ersichtlich, dass die Werkzeugöffnung WO das Außengewinde AG3 des ersten Teilkörpers T13 teilweise schneidet. Durch die Ausbildung der ersten Verbindungsstruktur auf Seiten des ersten Teilkörpers für die Verbindung der beiden Teilkörper als Außengewinde an einem Gewindefortsatz kann aber vorteilhafterweise der Durchmesser des Außengewindes relativ groß gewählt werden, so dass nur ein Teil des Außengewindes durch die Werkzeugöffnung WO gestört ist und trotz dieser Störung eine sichere Verbindung zwischen erstem und zweitem Teilkörper gegeben ist.

Durch die Unterteilung des Abutments in einen ersten und einen zweiten Teilkörper kann zum einen die Befestigung des ersten Teilkörpers mittels des Werkzeugs WZ in gebräuchlicher einfacher Weise vorgenommen werden und zum anderen mit der nachfolgenden Abdeckung der Werkzeugöffnung durch den zweiten Teilkörper eine hygienisch besonders vorteilhafte Anordnung geschaffen werden, da nach Aufsetzen des zweiten Teilkörpers, welcher von dem Benutzer selbst nicht entfernt wird, ein Eindringen von Verschmutzungen in die Werkzeugöffnung WO zuverlässig verhindert wird. Zugleich bleibt die Lösbarkeit der Prothese von dem Abutment uneingeschränkt erhalten und darüber hinaus kann der zweite Teilkörper bei Beschädigung oder Verschleiß des die Haltestruktur bildenden Ringwulstes RW oder bei Wechsel zu einem anderen Haltesystem wieder mit geringem Aufwand entfernt und durch einen anderen zweiten Teilkörper ersetzt werden.

Für eine sichere Verbindung ohne zusätzliche Maßnahmen wie beispielsweise Verkleben sind Außengewinde AG und Innengewinde IG vorteilhafterweise als Feingewinde mit einer Gewindesteigung von maximal 0,5 mm ausgeführt. Der Durchmesser der zweiten Gewindeverbindung G2 ist vorteilhafterweise größer, insbesondere um wenigstens 20 % größer als der Gewindedurchmesser der ersten Gewindeverbindung G1 zwischen Befestigungsschraube und Implantat. Der Durchmesser der zweiten Gewindeverbindung G2 beträgt vorteilhafterweise wenigstens 2 mm.

Der in Fig. 1 mit NW bezeichnete Neigungswinkel zwischen der ersten Achse A1 und der zweiten Achse A2 beträgt für ein derartiges anguliertes Abutment vorteilhafterweise wenigstens 10°. Vorteilhafterweise sind innerhalb eines Implantatsystems Abutments mit unterschiedlicher Abwinklung vorhanden, wobei bei ausreichender Knochensubstanz bevorzugt nicht abgewinkelte Abutments, welche als solche bekannt sind, eingesetzt werden.

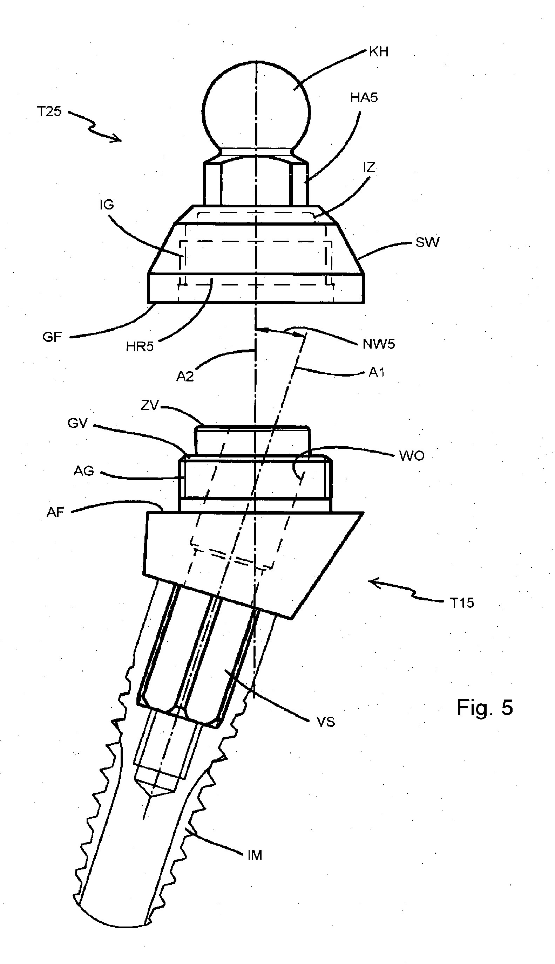

Fig. 5 zeigt in zu Fig. 2 ähnlicher Seitenansicht eine andere Ausführung eines erfindungsgemäß zweiteiligen Abutments mit einem ersten Teilkörper T15 und einem zweiten Teilkörper T25 in voneinander gelöster Einzeldarstellung. In dem in Fig. 5 skizzierten Beispiel beträgt der Neigungswinkel NW5 zwischen der ersten Achse A1 und der zweiten Achse A2 lediglich ca. 17,5°. Durch den kleineren Winkel tritt die Werkzeugöffnung WO in dem ersten Teilkörper durch den Gewindevorsprung GV2 hindurch, ohne das Außengewinde AG zu schneiden. Die Befestigungsschraube ist in Fig.5 nicht mit eingezeichnet.

Der zweite Teilkörper T25 in Fig. 5 weist als eine Haltestruktur einen Kugelkopf KH auf, welcher als Haltestruktur an sich bekannt und gebräuchlich ist. Ein Werkzeugansatz HA5 ist in diesem Beispiel in axialer Richtung zwischen der Haltestruktur HA5 und der Seitenwand SW vorgesehen.

Das Abutment nach Fig. 5 zeigt wie die Ausführungsform nach Fig. 3 Zentriereinrichtungen in Form eines Zentrierfortsatzes ZV an dem ersten Teilkörper T15 und einer Innenzentrierstruktur IZ in dem zweiten Teilkörper T25, welche beim Aufschrauben des zweiten Teilkörpers T25 auf den ersten Teilkörper T15 in gegenseitigem Eingriff treten und dabei eine bezüglich der zweiten Achse A2 radiale Zentrierung der beiden Teilkörper bewirken. Zentriervorsprung ZV und Innenzentrierstruktur IZ sind um die zweite Achse A2 relativ zueinander verdrehbar. Durch den gegenüber dem Durchmesser der zweiten Gewindeverbindung mit dem Innengenwinde IG geringeren Durchmesser von Zentrierfortsatz ZV und Innenzentrierstruktur IZ kann die Zentrierung mit dem verjüngten Verlauf der Außenfläche der Seitenwand vorteilhaft kombiniert und eine geringe, aber ausreichende Wandstärke um den Hohlraum HR5 erreicht werden.

## Patentansprüche

1. Abutment für eine zahnprothetische Anordnung, mit einer um eine erste Achse (A1) drehbaren Befestigungsschraube (BF) an einem implantatseitigen ersten Ende, einer eine zweite Achse (A2) als Fügerichtung (FA) einer Haltevorrichtung bestimmenden Haltestruktur an einem prothesenseitigen zweiten Ende, wobei die erste Achse (A1) und die zweite Achse (A2) gegeneinander geneigt verlaufen, sowie mit einer dem ersten Ende abgewandt in Verlängerung der ersten Achse (A1) angeordneten Werkzeugöffnung (WO) als Zugang zu der Befestigungsschraube (BF) wobei
- ein erster und ein zweiter Teilkörper (T1, T2) vorhanden sind,
- das implantatseitige erste Ende und die Werkzeugöffnung (WO) an dem ersten Teilkörper (T1) und die Haltestruktur (RW) an dem zweiten Teilkörper (T2) ausgebildet sind,
- die beiden Teilkörper (T1, T2) über Verbindungsstrukturen miteinander verbindbar sind,
- der zweite Teilkörper (T2) in dem verbundenen Zustand die Werkzeugöffnung (WO) des ersten Teilkörpers (T1) zumindest teilweise überdeckt, und
- die Verbindungsstrukturen zwischen den beiden Teilkörpern (T1, T2) eine Verschraubung mit einer zweiten Gewindeverbindung (G2) um die zweite Achse (A2) als Schraubenachse beinhalten,
**dadurch gekennzeichnet dass** die zweite Gewindeverbindung (G2) am zweiten Teilkörper (T2) ein Innengewinde (IG) an der Innenfläche einer Seitenwand (SW) enthält, und die zweite Gewindeverbindung (G2) am ersten Teilkörper (T1) einen in Richtung des zweiten Teilkörpers (T2) vorstehenden Gewindestutzen (GV) mit einem Aussengewinde (AG) enthält, wobei der Gewindestutzen (GV) gegen eine Anlagefläche (AF) vorspringt, an welcher sich eine Gegenfläche (GF) als Endkante der Seitenwand (SW) des zweiten Teilkörpers (T2) im verbundenen Zustand der beiden Teilkörper (T1, T2) abstützt.

2. Abutment nach Anspruch 1, **dadurch gekennzeichnet, dass** der zweite Teilkörper (T2) in dem verbundenen Zustand die Werkzeugöffnung (WO) vollständig überdeckt.

3. Abutment nach Anspruch1 oder 2, **dadurch gekennzeichnet, dass** der zweite Teilkörper (T2) einen dem ersten Teilkörper (T1) zugewandten und seitlich durch die um die zweite Achse umlaufende Seitenwand (SW) begrenzten Hohlraum (HR) aufweist.

4. Abutment nach Anspruch 3, **dadurch gekennzeichnet, dass** der Hohlraum (HR) mit Ausnahme einer dem ersten Teilkörper (T1) zugewandten Öffnung allseitig geschlossen ist.

5. Abutment nach einem der Ansprüche 1 bis 4, **dadurch gekennzeichnet dass** die dem ersten Teilkörper (T1) zugewandte Endkante der Seitenwand (SW) eine ringförmige Gegenfläche (GF) zu der an dem ersten Teilkörper (T1) ausgebildeten Anlagefläche (AF) bildet.

6. Abutment nach einem der Ansprüche 1 bis 5, **dadurch gekennzeichnet, dass** die Werkzeugöffnung (WO) zumindest teilweise das Außengewinde (AG) des ersten Teilkörpers (T1) schneidet.

7. Abutment nach einem der Ansprüche 1 bis 6, **dadurch gekennzeichnet, dass** die zweite Gewindeverbindung (G2) ein Feingewinde mit einer Gewindesteigung von maximal 0,5 mm enthält.

8. Abutment nach einem der Ansprüche 1 bis 7, **dadurch gekennzeichnet, dass** der Durchmesser der zweiten Gewindeverbindung (G2) um wenigstens 20 % größer ist als der Durchmesser der ersten Gewindeverbindung (G1) der Befestigungsschraube (BF).

9. Abutment nach einem der Ansprüche 1 bis 8, **dadurch gekennzeichnet, dass** der Durchmesser der zweiten Gewindeverbindung (G2) wenigstens 2 mm beträgt.

10. Abutment nach einem der Ansprüche 1 bis 9, **dadurch gekennzeichnet, dass** gegen die zweite Gewindeverbindung (G2) axial versetzte Zentriereinrichtungen (ZV, IZ) vorgesehen sind.

11. Abutment nach einem der Ansprüche 1 bis 10, **dadurch gekennzeichnet, dass** die Haltestruktur (RW) eine durch eine Gegenstruktur (HG) einer Zahnprothese hinterschnappbare Struktur bildet.

12. Abutment nach Anspruch 11, **dadurch gekennzeichnet, dass** die Haltestruktur einen um die zweite Achse (A2) umlaufenden radial vorspringenden Ringwulst (RW) bildet.

13. Abutment nach Anspruch 11, **dadurch gekennzeichnet, dass** die Haltestruktur einen Kugelkopf (KH) bildet.

14. Abutment nach einem der Ansprüche 1 bis 13, **dadurch gekennzeichnet, dass** an dem implantatseitigen ersten Ende des ersten Teilkörpers (T1) eine Verdrehsicherung (VS) ausgebildet ist.

15. Abutment nach einem der Ansprüche 1 bis 1514 **dadurch gekennzeichnet, dass** die zweite Achse (A2) um wenigstens 10° gegen die erste Achse (A1) geneigt ist.

16. Zahnprothetische Anordnung mit einer Zahnprothese (PR) und mit wenigstens einem Implantat (IM) sowie einem an dem Implantat (IM) befestigten Abutment (AB) nach einem der vorangehenden Ansprüche, wobei der erste Teilkörper (T1) des Abutments (AB) mittels der in ein Innengewinde des Implantats (IM) eingreifenden Befestigungsschraube (BF) an dem Implantat (IM) befestigt ist und die Zahnprothese (PR) über die Haltestruktur (RW) des zweiten Teilkörpers (T2) an dem Abutment (AB) gehalten ist.

17. Zahnprothetische Anordnung nach Anspruch 16, **dadurch gekennzeichnet, dass** die Zahnprothese (PR) werkzeuglos in Richtung der zweiten Achse (A2) von der Haltestruktur (RW) des Abutments (AB) lösbar oder auf dieses aufsteckbar ist.

18. Zahnprothetische Anordnung nach Anspruch 17, **dadurch gekennzeichnet, dass** bei von dem Abutment (AB) gelöster Zahnprothese (PR) der zweite Teilkörper (T2) mit der Haltestruktur (RW) zerstörungsfrei und ohne Lageveränderung des ersten Teilkörpers (T1) von dem ersten Teilkörper (T1) lösbar ist.

## Claims

1. Abutment for a dental-prosthetic arrangement, having a fastening screw (BF), which can be rotated about a first axis (A1) and is located at a first, implant-side end, having a retaining structure, which defines a second axis (A2) as the joining direction (FR) of a retaining device and is located at a second, prosthetic-side end, wherein the first axis (A1) and the second axis (A2) are inclined in relation to one another, and having a tool opening (WO), which is directed away from the first end, in extension of the first axis (A1), and serves as an access to the fastening screw (BF), wherein
- a first and a second sub-component (T1, T2) are present,
- the first, implant-side end and the tool opening (WO) are formed on the first sub-component (T1) and the retaining structure (RW) is formed on the second sub-component (T2),
- the two sub-components (T1, T2) can be connected to one another via connecting structures,
- the second sub-component (T2), in the connected state, at least partially covers over the tool opening (WO) of the first sub-component (T1), and
- the connecting structures between the two sub-components (T1, T2) contain a screw-connection with a second threaded connection (G2) around the second axis (A2) as screw axis,
**characterized in that** the second threaded connection (G2), on the second sub-component (T2), contains an internal thread (IG) on the inner surface of a side wall (SW), and the second threaded connection (G2), on the first sub-component (T1), contains a threaded stub (GV), which projects in the direction of the second sub-component (T2) and has an external thread (AG), wherein the threaded stub (GV) projects in relation to a bearing surface (AF), on which is supported, in the connected state of the two sub-components (T1, T2), a mating surface (GF) as end edge of the side wall (SW) of the second sub-component (T2).

2. Abutment according to Claim 1, **characterized in that** the second sub-component (T2), in the connected state, completely covers over the tool opening (WO).

3. Abutment according to Claim 1 or 2, **characterized in that** the second sub-component (T2) has a cavity (HR) which is directed towards the first sub-component (T1) and is delimited laterally by the side wall (SW) encircling the second axis.

4. Abutment according to Claim 3, **characterized in that** the cavity (HR), with the exception of an opening directed towards the first sub-component (T1), is closed all the way round.

5. Abutment according to one of Claims 1 to 4, **characterized in that** that end edge of the side wall (SW) which is directed towards the first sub-component (T1) forms an annular mating surface (GF) in relation to the bearing surface (AF), which is formed on the first sub-component (T1).

6. Abutment according to one of Claims 1 to 5, **characterized in that** the tool opening (WO) at least partially intersects the external thread (AG) of the first sub-component (T1).

7. Abutment according to one of Claims 1 to 6, **characterized in that** the second threaded connection (G2) contains a fine thread with a thread pitch of not more than 0.5 mm.

8. Abutment according to one of Claims 1 to 7, **characterized in that** the diameter of the second threaded connection (G2) is around at least 20% larger than the diameter of the first threaded connection (G1) of the fastening screw (BF).

9. Abutment according to one of Claims 1 to 8, **characterized in that** the diameter of the second threaded connection (G2) is at least 2 mm.

10. Abutment according to one of Claims 1 to 9, **characterized by** the provision of centring devices (ZV, IZ) which are offset axially in relation to the second threaded connection (G2).

11. Abutment according to one of Claims 1 to 10, **characterized in that** the retaining structure (RW) forms a structure which can have a mating structure (HG) of a tooth prosthesis snap-fitting behind it.

12. Abutment according to Claim 11, **characterized in that** the retaining structure forms a radially projecting annular bead (RW) which encircles the second axis (A2).

13. Abutment according to Claim 11, **characterized in that** the retaining structure forms a ball head (KH).

14. Abutment according to one of Claims 1 to 13, **characterized in that** a rotation-prevention means (VS) is formed at the first, implant-side end of the first sub-component (T1).

15. Abutment according to one of Claims 1 to 14, **characterized in that** the second axis (A2) is inclined by at least 10° in relation to the first axis (A1).

16. Dental-prosthetic arrangement having a dental prosthesis (PR), having at least one implant (IM) and having an abutment (AB), which is fastened on the implant (IM), according to one of the preceding claims, wherein the first sub-component (T1) of the abutment (AB) is fastened on the implant (IM) by means of the fastening screw (BF), which engages in an internal thread of the implant (IM), and the dental prosthesis (PR) is retained on the abutment (AB) via the retaining structure (RW) of the second sub-component (T2).

17. Dental-prosthetic arrangement according to Claim 16, **characterized in that** the dental prosthesis (PR) can be released from the retaining structure (RW) of the abutment (AB), or plugged onto the same, in the direction of the second axis (A2) without any tools being required.

18. Dental-prosthetic arrangement according to Claim 17, **characterized in that**, with the dental prosthesis (PR) released from the abutment (AB), the second sub-component (T2), with the retaining structure (RW), can be released from the first sub-component (T1) in a non-destructive manner and without any change in position of the first sub-component (T1).

## Revendications

1. Pilier pour un agencement pour prothèse dentaire, comprenant une vis de fixation (BF) pouvant tourner autour d'un premier axe (A1) à une première extrémité côté implant, une structure de retenue définissant un deuxième axe (A2) en tant que direction d'assemblage (FR) d'un dispositif de retenue à une deuxième extrémité côté prothèse, le premier axe (A1) et le deuxième axe (A2) s'étendant de manière inclinée l'un par rapport à l'autre, et comprenant une ouverture d'outil (WO) disposée dans le prolongement du premier axe (A1) à l'opposé de la première extrémité, en tant qu'accès à la vis de fixation (BF),
- un premier et un deuxième corps partiel (T1, T2) étant prévus,
- la première extrémité côté implant et l'ouverture d'outil (WO) étant réalisées au niveau du premier corps partiel (T1) et la structure de retenue (RW) étant réalisée au niveau du deuxième corps partiel (T2),
- les deux corps partiels (T1, T2) pouvant être assemblés l'un à l'autre par le biais de structures d'assemblage,
- le deuxième corps partiel (T2), dans l'état assemblé, recouvrant au moins en partie l'ouverture d'outil (WO) du premier corps partiel (T1), et
- les structures d'assemblage entre les deux corps partiels (T1, T2) contenant un vissage avec une deuxième connexion filetée (G2) autour du deuxième axe (A2) en tant qu'axe de vis,
**caractérisé en ce que** la deuxième connexion filetée (G2) au niveau du deuxième corps partiel (T2) contient un filetage intérieur (IG) au niveau de la surface interne d'une paroi latérale (SW), et la deuxième connexion filetée (G2) au niveau du premier corps partiel (T1) contient une tubulure filetée (GV) avec un filetage extérieur (AG) faisant saillie dans la direction du deuxième corps partiel (T2), la tubulure filetée (GV) faisant saillie contre une face d'appui (AF), contre laquelle s'appuie une surface conjuguée (GF) en tant qu'arête d'extrémité de la paroi latérale (SW) du deuxième corps partiel (T2) dans l'état assemblé des deux corps partiels (T1, T2).

2. Pilier selon la revendication 1, **caractérisé en ce que** le deuxième corps partiel (T2) recouvre complètement l'ouverture d'outil (WO) dans l'état assemblé.

3. Pilier selon la revendication 1 ou 2, **caractérisé en ce que** le deuxième corps partiel (T2) présente une cavité (HR) tournée vers le premier corps partiel (T1) et limitée latéralement par la paroi latérale (SW) entourant le deuxième axe.

4. Pilier selon la revendication 3, **caractérisé en ce que** la cavité (HR) est fermée de tous les côtés à l'exception d'une ouverture tournée vers le premier corps partiel (T1).

5. Pilier selon l'une quelconque des revendications 1 à 4, **caractérisé en ce que** l'arête d'extrémité de la paroi latérale (SW) tournée vers le premier corps partiel (T1) forme une surface conjuguée annulaire (GF) pour la surface d'appui (AF) réalisée sur le premier corps partiel (T1).

6. Pilier selon l'une quelconque des revendications 1 à 5, **caractérisé en ce que** l'ouverture d'outil (WO) coupe au moins en partie le filetage extérieur (AG) du premier corps partiel (T1).

7. Pilier selon l'une quelconque des revendications 1 à 6, **caractérisé en ce que** la deuxième connexion filetée (G2) contient un filetage fin avec un pas de filetage de 0,5 mm au maximum.

8. Pilier selon l'une quelconque des revendications 1 à 7, **caractérisé en ce que** le diamètre de la deuxième connexion filetée (G2) est supérieur d'au moins 20 % au diamètre de la première connexion filetée (G1) de la vis de fixation (BF).

9. Pilier selon l'une quelconque des revendications 1 à 8, **caractérisé en ce que** le diamètre de la deuxième connexion filetée (G2) est d'au moins 2 mm.

10. Pilier selon l'une quelconque des revendications 1 à 9, **caractérisé en ce que** des dispositifs de centrage décalés axialement (ZV, IZ) par rapport à la deuxième connexion filetée (G2) sont prévus.

11. Pilier selon l'une quelconque des revendications 1 à 10, **caractérisé en ce que** la structure de retenue (RW) forme une structure pouvant être encliquetée par l'arrière par une structure conjuguée (HG) d'une prothèse dentaire.

12. Pilier selon la revendication 11, **caractérisé en ce que** la structure de retenue forme un bourrelet annulaire (RW) saillant radialement entourant le deuxième axe (A2).

13. Pilier selon la revendication 11, **caractérisé en ce que** la structure de retenue forme une tête sphérique (KH).

14. Pilier selon l'une quelconque des revendications 1 à 13, **caractérisé en ce qu'**une fixation en rotation (VS) est réalisée au niveau de la première extrémité, côté implant, du premier corps partiel (T1).

15. Pilier selon l'une quelconque des revendications 1 à 14, **caractérisé en ce que** le deuxième axe (A2) est incliné d'au moins 10° par rapport au premier axe (A1).

16. Agencement pour prothèse dentaire comprenant une prothèse dentaire (PR) et au moins un implant (IM) ainsi qu'un pilier (AB) fixé sur l'implant (IM) selon l'une quelconque des revendications précédentes, le premier corps partiel (T1) du pilier (AB) étant fixé sur l'implant (IM) au moyen de la vis de fixation (BF) s'engageant dans un filetage intérieur de l'implant (IM) et la prothèse dentaire (PR) étant retenue sur le pilier (AB) par le biais de la structure de retenue (RW) du deuxième corps partiel (T2).

17. Agencement pour prothèse dentaire selon la revendication 16, **caractérisé en ce que** la prothèse dentaire (PR) peut être détachée sans outil dans la direction du deuxième axe (A2) de la structure de retenue (RW) du pilier (AB) ou peut être enfichée sur celui-ci.

18. Agencement pour prothèse dentaire selon la revendication 17, **caractérisé en ce que** dans le cas où la prothèse dentaire (PR) est détachée du pilier (AB), le deuxième corps partiel (T2) avec la structure de retenue (RW) peut être détaché du premier corps partiel (T1) sans destruction et sans modification de la position du premier corps partiel (T1).
